# EUROPÄISCHE PATENTANMELDUNG

(11) **EP 2 103 466 A1**
(43) Veröffentlichungstag der Anmeldung: **23.09.2009**
(21) Anmeldenummer: 08102764.1
(22) Anmeldetag: 19.03.2008
(51) Int. Cl.: B60J 5/10, E05B 65/16

(54) **Tür für einen Kofferaufbau eines Nutzfahrzeugs**

(71) Anmelder: Schmitz Cargobull AG, 48341 Altenberge (DE)
(72) Erfinder: Alfons Heßling, 48683 Ahaus (DE); Josef Küpers, 48703 Stadtlohn (DE); Heinz Abbing, 48683 Ahaus (DE)
(74) Vertreter: Cohausz & Florack

(57) **Zusammenfassung**

Die Erfindung betrifft eine Tür (1) für einen Kofferaufbau (K) eines Nutzfahrzeugs, mit einem Türblatt (4) und einer Verriegelungseinrichtung (10). Um eine Türe zu schaffen, die einfach, schnell und somit kostengünstig gefertigt werden kann, ist vorgesehen, dass ein an dem Türblatt (4) befestigtes Halteprofil (6) vorgesehen ist, dass die Verriegelungseinrichtung (10) an dem Halteprofil (6) in wenigstens einer Richtung (x) befestigt ist, und dass die Verriegelungseinrichtung (10) über wenigstens ein Positionierungselement (20, 20') positionsgenau in der einen Richtung am Halteprofil (6) festgelegt ist.

## Beschreibung

Die Erfindung betrifft eine Tür für einen Kofferaufbau eines Nutzfahrzeugs, mit einem Türblatt und einer Verriegelungseinrichtung.

Derartige Türen sind etwa zum Verschließen von Kofferaufbauten von Lastkraftwagen, Trailern oder Anhängern bekannt, wozu die Türen über Scharniere an einem Rückwandrahmen des Kofferaufbaus schwenkbar befestigt werden. Gegenüber den Scharnieren ist an der Außenseite der Tür wenigstens eine Verriegelungseinrichtung zum Verriegeln der Türe während der Fahrt vorgesehen. Die Verriegelungseinrichtung erstreckt sich über mehr als die gesamte Höhe der Tür und umfasst eine Verriegelungsstange, einen an dieser befestigten Handgriff zum Drehen der Verriegelungsstange und an beiden Enden der Verriegelungsstange jeweils einen Finger zum Hintergreifen von hierfür vorgesehenen Elementen des Rückwandrahmens des Kofferaufbaus. Je nach Stellung der Finger, welche über den Handhebel verändert wird, ist die Türe entweder offen oder verriegelt.

Nachteilig an den bekannten Türen sind die Kosten für deren Herstellung. Die Fertigungskosten resultieren dabei nicht zuletzt aus der arbeitsintensiven und zeitraubenden Montage der Türen.

Vor diesem Hintergrund lag der Erfindung die Aufgabe zu Grunde, eine Türe zu schaffen, die einfach, schnell und somit kostengünstig gefertigt werden kann.

Diese Aufgabe ist erfindungsgemäß durch die Lehre des Anspruchs 1 gelöst worden. In den auf den Anspruch 1 rückbezogenen Ansprüchen sind vorteilhafte Ausgestaltungen dieser Lehre angegeben.

Die Erfindung basiert auf dem Gedanken, die Verriegelungseinrichtung vorzukonfektionieren und anschließend in einem einzigen Arbeitsschritt an der Türe zu befestigen. Die Vorkonfektionierung ermöglicht einen zügigen zusammenbau auf engstem Raum, da die Vorkonfektionierung fernab von dem recht sperrigen Türblatt erfolgen kann. Zudem ist eine entsprechende Vorkonfektionierung der Verriegelungseinrichtung ohne besonderen Aufwand in hohem Maße automatisierbar.

Darüber hinaus kann die auf diese Weise vorkonfektionierte Verriegelungseinrichtung ohne weiteres für den Anbau an ein Türblatt vorbereitet werden. Hierzu ist es lediglich erforderlich, die vorkonfektionierte Verriegelungseinrichtung in wenigstens einer Richtung positionsgenau mit einem Halteprofil zu verbinden, wozu wenigstens ein entsprechend ausgebildetes und mit der Verriegelungseinrichtung korrespondierendes Positionierungselement am Halteprofil vorgesehen ist.

Danach kann dann das Halteprofil genommen und in einem Arbeitsschritt zusammen mit der Verriegelungseinrichtung an dem Türblatt befestigt, beispielsweise verklebt, werden. Die Position der Verriegelungseinrichtung bleibt jedenfalls in der einen Richtung, etwa der Schwerkraftrichtung, in Bezug auf das Halteprofil bestehen, so dass lediglich das Halteprofil in dieser Richtung positionsgenau mit dem Türblatt verbunden werden muss, um gleichzeitig eine in gleicher Richtung positionsgenaue Ausrichtung der Verriegelungseinrichtung in Bezug auf das Türblatt sicherzustellen. Weitere zeitraubende und komplizierte Arbeitsschritte am Türblatt sind zum Befestigen der Verriegelungseinrichtung nicht mehr erforderlich. Es müssen insbesondere keine Beschläge zum Halten der Verriegelungseinrichtung an das Türblatt geschraubt werden.

Unter Nutzfahrzeugen werden insbesondere Lastkraftwagen mit einem auf dem Chassis des Lastkraftwagens befestigten Kofferaufbau sowie von einem Lastkraftwagen zu ziehende nicht motorisierte Fahrzeuge verstanden. Dabei handelt es sich etwa um Anhänger oder Auflieger, die auch als Trailer bezeichnet werden.

Eine erste vorteilhafte Ausgestaltung der Erfindung sieht vor, dass die Verriegelungseinrichtung an dem Halteprofil in wenigstens zwei zueinander senkrecht stehenden Richtungen befestigt ist. Dann kann die Verriegelungseinrichtung über das wenigstens eine Positionierungselement positionsgenau in den zwei Richtungen am Halteprofil festgelegt werden. Im Ergebnis bleibt die Verriegelungseinrichtung in den beiden Raumrichtungen gegenüber dem Halteprofil ausgerichtet und wird dabei bei richtiger Montage des Halteprofils an dem Türblatt in denselben beiden Richtungen gegenüber dem Türblatt ausgerichtet. Ein unbeabsichtigtes Verrutschen der Verriegelungseinrichtung in einer dieser beiden Richtungen kann so vermieden werden.

Die wenigstens zwei zueinander senkrecht stehenden Richtungen der Positionierung der Verriegelungseinrichtung gegenüber dem Halteprofil verlaufen vorzugsweise in einer Ebene parallel zur Ebene der Türe und damit des Türblatts. In dieser Ebene kommt es ansonsten bei der Montage leicht zu einem ungewollten Verrutschen oder Verschieben der Verriegelung in Bezug auf das Halteprofil.

Unabhängig von der Anzahl der Richtungen, in denen die Verriegelungseinrichtung mit dem Halteprofil verbunden und gleichzeitig positioniert ist, kann die Montage dadurch vereinfacht werden, dass die Verriegelungseinrichtung formschlüssig mit dem wenigstens einen Positionierungselement verbunden ist. In einer bevorzugten weil einfachen Ausgestaltung der Erfindung kann eine korrespondierende Nut/Feder-Verbindung zwischen der Verriegelungseinrichtung und dem Halteprofil vorgesehen werden. Das formschlüssige Verbinden von Verriegelungseinrichtung und Halteprofil erlaubt es, dass die Verriegelungseinrichtung lediglich in das Halteprofil eingelegt werden muss, um mit diesem positionsgenau verbunden zu werden. Dadurch werden sehr kurze Montagezeiten ermöglicht.

Eine Verbindung mit einer gleichzeitigen Positionierung der Verriegelungseinrichtung in einer Richtung senkrecht zur Ebene der Tür bzw. des Türblatts kann in besonders einfacher Weise dann erreicht werden, wenn das Halteprofil mit einem Abdeckprofil verbunden wird. Dabei bilden Halteprofil und Abdeckprofil zusammen vorzugsweise ein im Wesentlichen geschlossenes Hohlprofil. Die Zweiteiligkeit des Hohlprofils ermöglicht insbesondere auch ein einfaches Verbinden und Positionieren der Verriegelungseinrichtung in drei zueinander senkrecht stehenden Richtungen. So kann die Verriegelungseinrichtung parallel zur Ebene des Türblatts durch Einlegen der Verriegelungseinrichtung und senkrecht zur Ebene des Türblatts durch anschließendes Aufbringen des Abdeckprofils auf das Halteprofil verbunden und positioniert werden. Die Positionierung in allen drei Raumrichtungen ist besonders bevorzugt, weil dann ein unbeabsichtigtes Verschieben der Verriegelungseinrichtung relativ zum Halteprofil bzw. zum Türblatt ausgeschlossen werden kann.

Bei der Richtung, in der die Verriegelungseinrichtung am Halteprofil festgelegt wird, kann es sich in jedem Einzelfall um eine einzige Richtung etwa in Richtung der Schwerkraft, nicht aber auch um die Rückrichtung handeln. Bedarfsweise kann die Festlegung der Verriegelungseinrichtung am Halteprofil aber auch in zueinander parallelen Hin- und Rückrichtungen wirken, ohne dass es sich dabei um zwei unterschiedliche Richtungen im Sinne der Erfindung handelt. Grundsätzlich wird also im Zusammenhang mit der Erfindung unter einer Richtung vornehmlich eine Raumrichtung verstanden, worunter dann bedarfsweise entweder lediglich eine Hinrichtung oder bevorzugt sowohl eine Hinrichtung als auch eine Rückrichtung fallen kann.

Nach einer weiteren bevorzugten Ausgestaltung der Erfindung ist das Halteprofil an der Innenseite des Türblatts befestigt. Dadurch ist die Verriegelungseinrichtung gegen äußere Einflüsse, wie Schmutz, geschützt. Zudem kann ein unbeabsichtigtes Verbiegen der Verriegelungseinrichtung, etwa durch Nachlässigkeiten beim Rangieren des Nutzfahrzeugs, verhindert werden. Die Begriffe Innen- und Außenseite beziehen sich in diesem Zusammenhang auf den Kofferaufbau bei geschlossener Türe.

Insbesondere im Zusammenhang mit dem auf der Innenseite des Türblatts angebrachten Halteprofil kann zum Zwecke einer einfachen und schnellen Montage im Halteprofil eine Aussparung vorgesehen sein, die ein Verbinden der Verriegelungseinrichtung mit einem Handhebel zum Betätigen der Verriegelungseinrichtung erlaubt. Für den Fall, dass das Halteprofil und damit die Verriegelungseinrichtung auf der Innenseite des Türblatts angeordnet ist, weist das Türblatt vorzugsweise eine weitere mit der Aussparung des Halteprofils überlappende Aussparung auf, so dass der Handhebel mit der Verriegelungseinrichtung auf der Innenseite des Türblatts verbunden und dennoch von der Außenseite des Türblatts betätigt werden kann.

Die Verriegelungseinrichtung kann zum Anbringen des Handhebels ein Verbindungselement aufweisen, wobei dann vorzugsweise eine Verriegelungsstange durch das Verbindungselement geführt ist. Dadurch wird eine einfache und schnelle Vorkonfektionierung ermöglicht. Zur weiteren Vereinfachung der Montage wird der Handhebel nach der Montage von Verriegelungseinrichtung und Halteprofil am Türblatt an das Verbindungselement angeschraubt. Es kann alternativ aber auch vorgesehen sein, dass das Verbindungselement und der Handhebel einstückig ausgebildet sind.

Alternativ oder zusätzlich kann die Verriegelungseinrichtung benachbart zur Verbindung mit dem Handhebel an dem wenigstens einem Positionierungselement befestigt sein. Dadurch wird in diesem Bereich eine höhere Steifigkeit bereitgestellt. Vorzugsweise wird die Verriegelungseinrichtung oberhalb und unterhalb des Verbindungselements für den Handhebel jeweils über wenigstens ein Positionierungselement am Halteprofil festgelegt sein. Dadurch können die über den Handhebel eingeleiteten Kräfte gleichmäßig von der Türe aufgenommen werden.

Zur entsprechenden Befestigung der Verriegelungseinrichtung an dem wenigstens einen Positionierungselement im Bereich des Handhebels - alternativ oder zusätzlich aber auch an anderen Stellen des Profils - ist nach einer bevorzugten Lehre an der Verriegelungseinrichtung wenigstens ein Befestigungselement vorgesehen. Die Formgebung des wenigstens einen Befestigungselements und des Halteprofils korrespondiert dann beispielsweise derart, dass es bereits beim Einbringen, insbesondere Einlegen, der Verriegelungseinrichtung in das Halteprofil zu wenigstens einer formschlüssigen Verbindung zwischen dem wenigstens einen Positionierungselement und dem wenigstens einen Befestigungselement kommt. Im Sinne der vorliegenden Erfindung sind die Begriffe Befestigungselement und Positionierungselement nicht zu eng auszulegen, denn sowohl die Verriegelungseinrichtung als auch das Halteprofil weist aufgrund des Zusammenwirkens Mittel auf, die jeweils mehr oder weniger zur Befestigung und zur Positionierung ausgebildet sind. Eine strikte Trennung zwischen diesen Wirkungen wird es in der Regel nicht geben, wodurch der Aufbau der Türe insgesamt auch vereinfacht wird.

Alternativ oder zusätzlich kann zur Vereinfachung der Vorkonfektionierung der Verriegelungseinrichtung durch das wenigstens eine Befestigungselement eine Verriegelungsstange geführt sein. Vereinfacht gesprochen werden bei der Vorkonfektionierung der Verrieglungseinrichtung die Bauteile der Verriegelungseinrichtung wie das Befestigungselement auf die Verriegelungsstange als zentrales Element aufgesteckt oder anderweitig fest mit der Verriegelungsstange verbunden.

Um eine Stabilisierung der Türe ohne einen erhöhten konstruktiven oder fertigungstechnischen Aufwand erreichen zu können, ist bei einer weiteren Ausgestaltung der Erfindung vorgesehen, dass das Halteprofil Teil eines im Randbereich der Türe im Wesentlichen umlaufenden und damit parallel zur Ebene des Türblatts im Wesentlichen geschlossenen Türrahmens ist.

In einem solchen Falle ist es weiter bevorzugt, wenn die Verriegelungseinrichtung wenigstens einen gegenüber dem Halteprofil teilweise überstehenden Eckverstärker zum Verbinden des Halteprofils mit anderen Teilen des Türrahmens aufweist. Dies führt einerseits zu einer weiteren Stabilisierung der Tür und andererseits zu einer schnellen und kostengünstigen Fertigung des Türrahmens. Der Türrahmen als solcher ist vorzugsweise bereits vorgefertigt, bevor er in einem Arbeitsschritt als solcher an dem Türblatt befestigt wird.

Dabei kann dann wiederum vorgesehen sein, dass wenigstens eine bzw. die Verriegelungsstange der Verriegelungseinrichtung durch den Eckverstärker hindurch geführt ist. Auch hierdurch wird eine Vereinfachung der Vorkonfektionierung der verriegelungseinrichtung ermöglicht.

Um die Verriegelungsstange in der gewünschten Position zu halten, kann wenigstens eine Aufdickung angrenzend zu wenigstens einem Eckverstärker und/oder einem Befestigungselement vorgesehen sein. Diese Aufdickung kann insbesondere eine Querschnittserweiterung der Verriegelungsstange sein, die ein Durchrutschen der Verriegelungsstange durch den benachbarten Eckverstärker oder das benachbarte Befestigungselement verhindert.

Wenn sich das Halteprofil wenigstens über einen Großteil der Höhe der Tür, insbesondere über im Wesentlichen die gesamte Höhe der Tür, erstreckt, stabilisiert dies nicht nur die Tür selbst, sondern schützt und verbirgt auch die Verriegelungseinrichtung.

Jedoch wird die Verriegelungseinrichtung vorzugsweise an beiden Enden gegenüber dem Halteprofil überstehen und mit den an diesen überstehenden Enden vorgesehenen Verriegelungsmitteln zur Verriegelung der Türe dienen. Die Verriegelungsmittel können beispielsweise als Finger zum Eingreifen oder Hintergreifen entsprechender Mittel einer Rahmenstruktur des Kofferaufbaus ausgebildet sein.

Nachfolgend wird die Erfindung anhand einer ein Ausführungsbeispiel darstellenden Zeichnung näher erläutert.

### Es zeigen:

- Fig. 1: einen Lastkraftwagen mit einem eine erfindungsgemäße Türe aufweisenden Kofferaufbau;
- Fig. 2: ein Detail der Türe aus Fig. 1 in einem Schnitt entlang einer horizontalen Schnittebene in einer perspektivischen Ansicht;
- Fig. 3: die Verriegelungseinrichtung der Türe aus Fig. 1 in Draufsicht;
- Fig. 4: ein Detail der Verriegelungseinrichtung aus Fig. 3;
- Fig. 5: die mit dem Halteprofil verbundene Verriegelungseinrichtung jeweils aus Fig. 2 ohne das Abdeckprofil in Draufsicht;

- Fig. 6: die Türe in einem Schnitt entlang der in Fig. 4 eingetragenen Schnittlinie V-V;
- Fig. 7: die Türe in einem Schnitt entlang der in Fig. 4 eingetragenen Schnittlinie VI-VI.

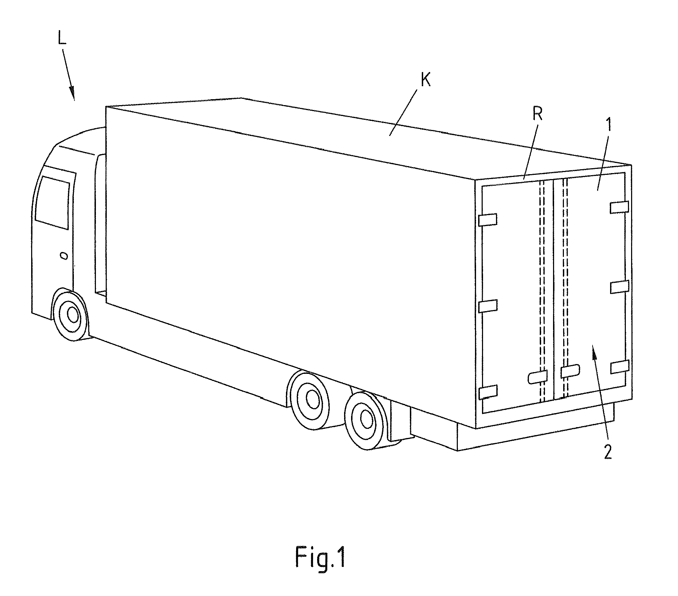

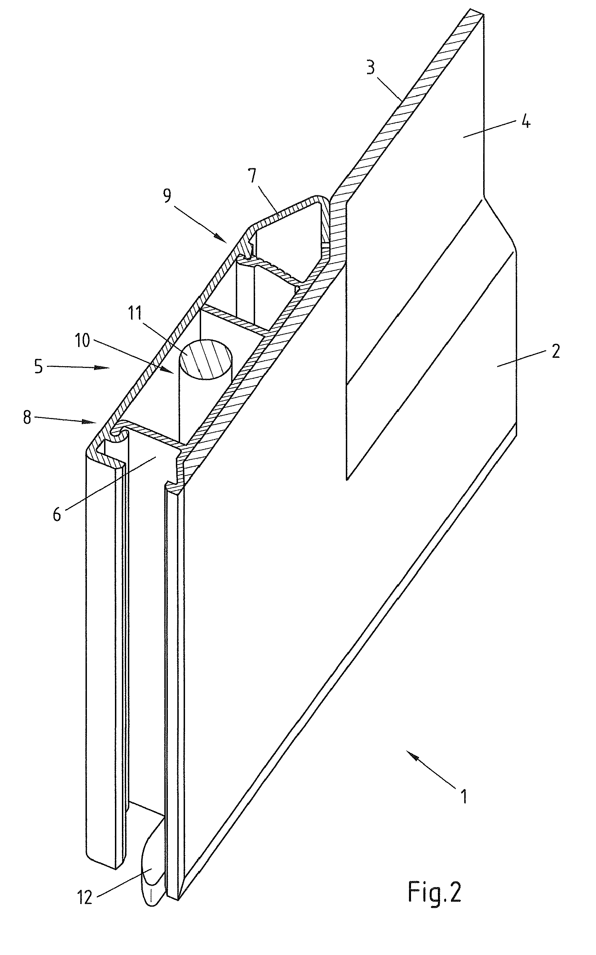

In der Fig. 1 ist ein Lastkraftwagen L mit einem Kofferaufbau K dargestellt. Der Koffer weist an seiner Rückwand einen Rückwandrahmen auf, an dem eine Tür 1 zum Verschließen des Kofferaufbaus K angeschlagen ist. Ein Detail dieser Türe 1 ist in der Fig. 2 in einem Schnitt entlang einer horizontalen Schnittebene dargestellt. Das Detail der Türe 1 ist perspektivisch mit Blick von der Außenseite 2 der Türe 1 gezeigt. Die Außenseite 2 der Türe 1 bildet in geschlossener Stellung ein Teil der Außenseite des Kofferaufbaus K. Die Innenseite 3 der Tür 1 befindet sich in geschlossener Stellung innerhalb des Kofferaufbaus K.

Die Außenseite 2 der Türe 1 wird im Wesentlichen durch das Türblatt 4 der Türe 1 bestimmt. Bei dem dargestellten Ausführungsbeispiel handelt es sich bei dem Türblatt 4 um eine tiefgezogene Kunststoffplatte aus einem thermoplastischen Kunststoffmaterial, beispielsweise Acrylnitril-Butadien-Styrol-Coppolymerisat (ABS). Einem Rand des Türblattes 4 zugeordnet ist ein Hohlprofil 5 vorgesehen, das aus zwei Teilprofilen zusammengesetzt ist. Mit einem Halteprofil 6 ist das Hohlprofil 5 mit der Innenseite 3 des Türblatts 4 verbunden, während das Halteprofil 6 seinerseits mit einem das Halteprofil 6 abdeckenden und das Hohlprofil 5 im Wesentlichen schließenden Abdeckprofil 7 verbunden ist. Die Verbindung besteht auf einer Seite in einer formschlüssigen Verbindung 8 und auf der anderen Seite in einer Rastverbindung 9.

Innerhalb des Hohlprofils 5 erstreckt sich eine Verriegelungseinrichtung 10 von der in der Fig. 2 lediglich eine das Hohlprofil 5 über dessen gesamte Länge durchlaufende Verriegelungsstange 11 und lediglich angedeutet ein Verriegelungsmittel 12 gezeigt ist. Das Verriegelungsmittel 12 ist zum Verriegeln der Türe 1 in dem an die Türe 1 angrenzenden Rückwandrahmen R des Kofferaufbaus K ausgebildet und am Ende der Verriegelungsstange 11 vorgesehen. Bei dem dargestellten Hohlprofil 5 sind beide Profilhälften Strangpressprofile aus Aluminium.

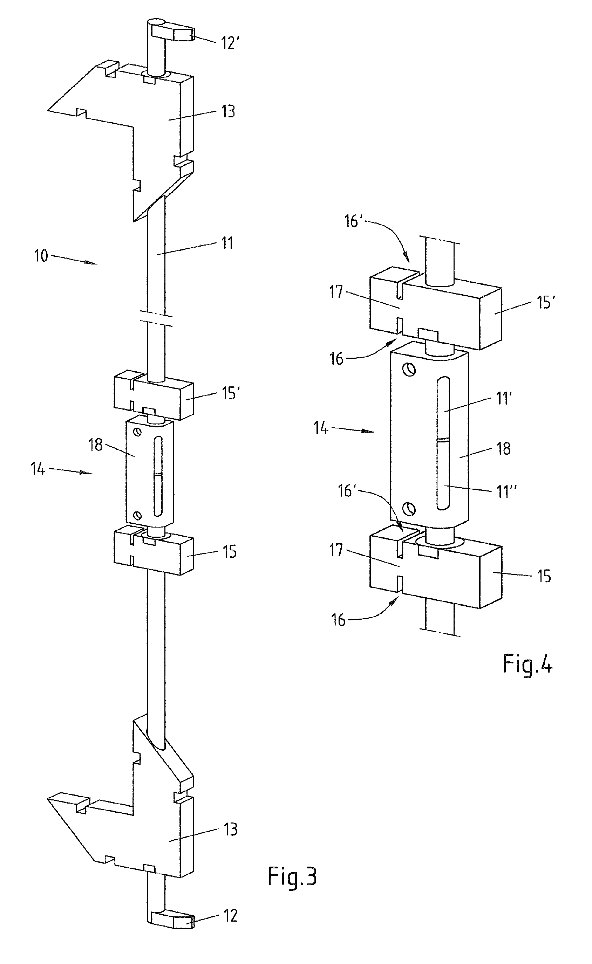

Vollständig ist die Verriegelungseinrichtung 10 in der Fig. 3 dargestellt. Bei den Verriegelungsmitteln 12 an beiden Enden der Verriegelungsstange 12 handelt es sich um Finger oder Klauen, die hinter entsprechende Mittel im Dachabschnitt und im Bodenabschnitt des Rückwandrahmens R formschlüssig eingehakt werden können. Dazwischen verläuft die Verriegelungsstange 11 durch benachbart zu den Enden der Verriegelungsstange vorgesehene Eckverstärker 13, die im Wesentlichen eine L-Form aufweisen und zur Ausbildung eines Türrahmenprofils dienen, das teilweise aus dem in Fig. 2 gezeigten Hohlprofil 5 besteht. Die Eckverstärker 13 dienen letztlich zur Aussteifung der Verbindung des Hohlprofils 5 mit dem restlichen Teil des Türrahmenprofils und andererseits zum Etablieren der Verbindung selbst, indem die vorstehenden Enden der Eckverstärker 13 in die benachbarten Profilabschnitte des Türrahmenprofils eingreifen und dort beispielsweise formschlüssig gehalten werden. Darüber hinaus dienen die Eckverstärker 13 infolge der Durchführung der Verriegelungsstange 11 der Lagerung der Verriegelungsstange 11.

Ein zentraler Abschnitt 14 der Verriegelungseinrichtung 10 ist in der Fig. 4 im Detail dargestellt. Im zentralen Abschnitt sind zwei Befestigungselemente 15, 15' vorgesehen, die der Positionierung der Verriegelungseinrichtung 10 im Halteprofil 6 und der Verbindung zwischen der Verriegelungseinrichtung 10 und dem Halteprofil 6 dienen. Dazu weisen die Befestigungselemente 15, 15' jeweils zwei in einer Ebene liegende Kerben 16, 16' auf, zwischen denen ein Steg 17, 17' verbleibt. Es kann sich alternativ auch um eine einzelne Kerbe handeln, die in einer Ebene U-förmig um den verbleibenden Steg umläuft. Auch die Befestigungselemente 15, 15' werden von der Verriegelungsstange 11 durchstoßen, so dass die Befestigungselemente 15, 15' gleichzeitig ein Lager für die Verriegelungsstange 11 bilden.

Die Befestigungselemente 15, 15' sind auf gegenüberliegenden Seiten eines Verbindungselements 18 auf der Verriegelungsstange 11 angeordnet. An diesem Verbindungselement 18 kann ein Handhebel 19 mit der Verriegelungseinrichtung 10 verschraubt werden, was nachfolgend noch näher erläutert wird. Die Verriegelungsstange ist im dargestellten Ausführungsbeispiel im Bereich des Verbindungselements 18 unterbrochen, wobei die beiden Teile 11', 11'' der Verriegelungsstange 11 mit gegenüberliegenden Enden des Verbindungselements 18 verbunden sind.

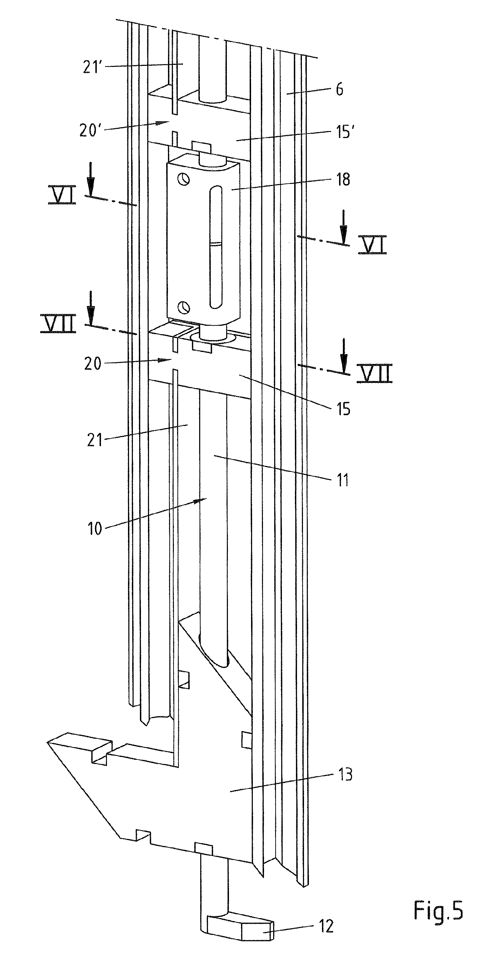

Die Fig. 5 zeigt, wie die Verriegelungseinrichtung 10 in das Halteprofil 6 eingebracht und dort in zwei Richtungen x, y senkrecht zueinander positioniert werden kann. Die beiden genannten Richtungen x, y sind jeweils parallel zu einer durch das Türblatt 4 definierten Ebene. Die Verriegelungseinrichtung 10 muss lediglich im Ganzen in das Halteprofil 6 eingelegt werden, wobei die Befestigungselemente 15, 15' eine formschlüssige Verbindung mit den Positionierungselementen 20, 20' eingehen. Die Positionierungselemente 20, 20' sind im dargestellten Ausführungsbeispiel zwei Aussparungen in zwei Rippen 21, 21' des Halteprofils 6. In diese Aussparungen können die Stege 17, 17' der Befestigungselemente 15, 15' formschlüssig eingebracht werden. Durch die Form der Kerben 16, 16' in den Befestigungselementen 15, 15'einerseits und der Form der Aussparungen der Rippen 21, 21' andererseits erfolgt automatisch eine Positionierung der Verriegelungseinrichtung 10 in Längsrichtung des Halteprofils 6, welche parallel zur Längsrichtung der Rippen 21, 21' ist, und quer zu dieser Richtung. Es versteht sich, dass alternativ auch eine durchgehende Rippe vorgesehen sein könnte.

Eine weitere Positionierung der Verriegelungseinrichtung 10 in Bezug auf das Halteprofil 6, die im Wesentlichen die Funktion einer zusätzlichen Stabilisierung hat, erfolgt an den Eckverstärkern 13. Die Außenseiten der Eckverstärker 13, die parallel zur Längserstreckung des Halteprofils 6 ausgerichtet sind, liegen an den Seiten eines U-förmigen Abschnitts des Halteprofils 6 an. Die Innenkontur des U-förmigen Abschnitts und die Außenkontur der Eckverstärker 13 sind also für eine formschlüssige Verbindung in bestimmte Richtungen in Bezug auf das Halteprofil 6 aufeinander abgestimmt.

Eine Fixierung der Verriegelungseinrichtung 10 und damit eine Positionierung derselben in allen drei Raumrichtungen x, y, z wird bei dem dargestellten Ausführungsbeispiel durch das Verbinden des Abdeckprofils 7 mit dem Halteprofil 6 erreicht. Die Befestigungselemente 15, 15' werden durch das aufgebrachte Abdeckprofil 7 in einer Richtung z senkrecht zur Ebene des Türblatts 4 fixiert. Auch die Eckverstärker 13 können durch entsprechende formschlüssige Verbindungen mit dem Abdeckprofil 7 in allen drei Raumrichtungen x, y, z fixiert sein.

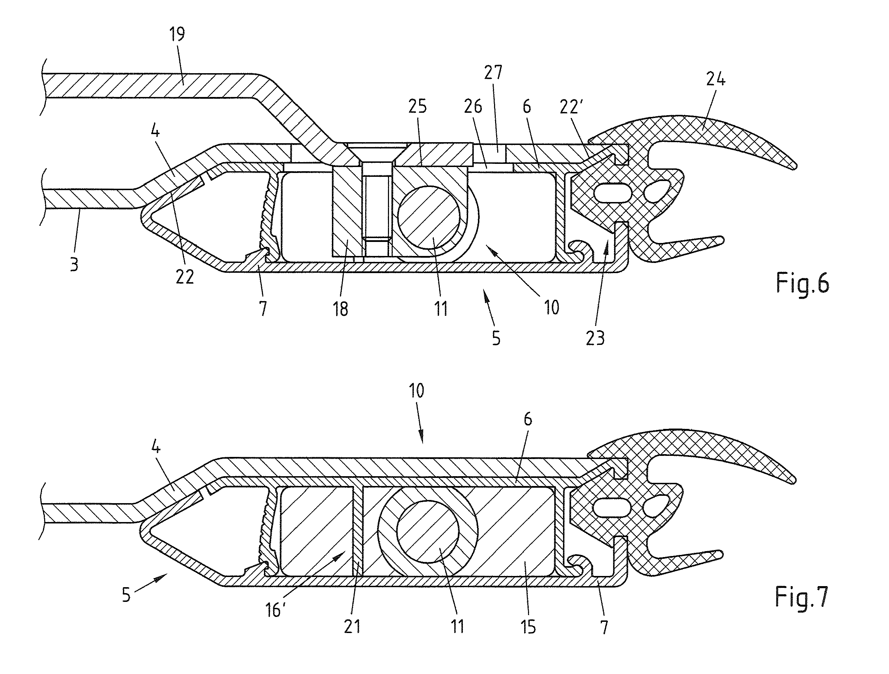

In der Fig. 6 ist die Türe 1 in einem Schnitt entlang der in Fig. 5 gekennzeichneten horizontalen Schnittlinie VI-VI auf Höhe des Handhebels 19 dargestellt. Das Hohlprofil 5 besteht aus dem Halteprofil 6 und dem Abdeckprofil 7 und ist mit der Innenseite 3 des Türblatts 4 verbunden, wobei eine exakte Positionierung zwischen dem Türblatt 4 und dem Hohlprofil 5 einfach und schnell durch entsprechende Anlageflächen 22, 22' von Türblatt 4 und Halteprofil 6 erreicht werden kann. Die Verbindung als solche kann etwa als Klebeverbindung ausgeführt sein. Im Randbereich des Hohlprofils 5 bilden das Halteprofil 6 und das Abdeckprofil 7 eine Aufnahme 23 für eine Türdichtung 24, die beim Schließen der Tür 1 mit einen weiteren Türe des Kofferaufbaus K oder mit einem Rückwandrahmen R in Anlage kommt.

Innerhalb des Hohlprofils 5 ist in der Fig. 6 das von der Verriegelungsstange 11 durchdrungene Verbindungselement 18 dargestellt, das mit einer Anlagefläche 25 für den Handhebel 19 etwa parallel zu einer Ausnehmung 26 des Halteprofils 6 ausgerichtet ist. Die Ausnehmung 26 des Halteprofils 6 überlappt mit einer Ausnehmung 27 des Türblatts 4, in welche der Handhebel 19 eingreift. Im Bereich der Ausnehmungen 26, 27 ist der Handhebel 19 mit dem Verbindungselement 18 verschraubt. Der Großteil des Handhebels 19 erstreckt sich also auf der Außenseite 2 der Tür 4. In der dargestellten Position des Handhebels 19 erstreckt sich dieser im Wesentlichen parallel zur Ebene des Türblatts 4 und befindet sich in einer geschlossenen Stellung. In einer offenen Stellung steht der Handhebel 19 im Wesentlichen senkrecht zur Ebene des Türblatts 4 von diesem ab, wobei die Verriegelungsstange 11 zusammen mit den Verriegelungsmitteln 12 um etwa 90° gedreht werden, was die Türe zum Verschwenken um nicht im Einzelnen dargestellte Scharniere freigibt.

In der Fig. 7 ist die Türe 1 in einem Schnitt entlang der in Fig. 5 gekennzeichneten horizontalen Schnittlinie VII-VII auf Höhe eines Befestigungselements 15 dargestellt. Das Befestigungselement 15 ist vom Halteprofil 6 und dem damit verbundenen Abdeckprofil 7 formschlüssig gehalten. Der von dem Hohlprofil 5 für das Befestigungselement 15 bereitgestellte Raum innerhalb des Hohlprofils 5 ist im Bereich der Schnittlinie vollständig vom Befestigungselement 15 ausgefüllt. Entscheidend ist hier jedoch die Rippe 21 des Halteprofils 6, welche eine Verschiebung des Befestigungselements 15 senkrecht zur Rippe 21 verhindert. Da die Rippe 21 ein Positionierungselement 20 in Form einer Unterbrechung oder Aussparung aufweist, in die das Befestigungselement 15 eingreift, wird auch eine Verschiebung des Befestigungselements 15 in einer Richtung y senkrecht zur Zeichenebene, also parallel zur Rippe 21, ausgeschlossen. Senkrecht zu diesen beiden Richtungen x, y ist auch keine Verschiebung des Befestigungselements 15 möglich, da das Halteprofil 6 durch das Abdeckprofil 7 verschlossen ist.

Die Verriegelungsstange 11 ist passgenau durch die Befestigungselemente 15 hindurchgeführt und über die Höhe der Tür 1 fest mit den weiteren Bestandteilen der Verriegelungseinrichtung 10 verbunden, so dass im dargestellten Ausführungsbeispiel die Befestigungselemente 15 alleine bereits eine exakte Positionierung der Verriegelungseinrichtung 10 in Bezug auf das Hohlprofil 5 und damit letztlich auch in Bezug auf das Türblatt 4 sicherstellen, egal ob weitere formschlüssige Verbindungen zwischen der Verriegelungseinrichtung 10 und dem Hohlprofil 5 vorgesehen sind oder nicht.

Damit die Verriegelungsstange 11 dauerhaft in der gewünschten relativen Position zu den übrigen Komponenten der Verriegelungseinrichtung 10 verbleibt und nicht etwa versehentlich verrutscht, sind an den Außenseiten der Eckverstärker 13 und an den Innenseiten der Befestigungselemente 15, 15' Aufdickungen 28, 28' vorgesehen. Die Durchmesser der Aufdickungen 28, 28' sind größer als die Durchführungen der Eckverstärker 13 und der Befestigungselemente 15, 15', so dass eine Lagefixierung in Richtung der Verriegelungsstange 11 erfolgt.

## Patentansprüche

1. Tür (1) für einen Kofferaufbau (K) eines Nutzfahrzeugs, mit einem Türblatt (4) und einer Verriegelungseinrichtung
(10), **dadurch gekenzeichnet,**
**dass** ein an dem Türblatt (4) befestigtes Halteprofil (6) vorgesehen ist, dass die Verriegelungseinrichtung
(10) an dem Halteprofil (6) in wenigstens einer Richtung (x) befestigt ist, und dass die Verriegelungseinrichtung (10) über wenigstens ein Positionierungselement (20, 20') positionsgenau in der einen Richtung (x) am Halteprofil (6) festgelegt ist.

2. Tür nach Anspruch 1, **dadurch gekenzeichnet, dass** die Verriegelungseinrichtung (10) an dem Halteprofil (6) in wenigstens zwei zueinander senkrecht stehenden Richtungen (x, y) befestigt ist, und dass die Verriegelungseinrichtung (10) über das wenigstens eine Positionierungselement (20) positionsgenau in den zwei Richtungen (x, y) am Halteprofil (6) festgelegt ist.

3. Tür nach Anspruch 2, **dadurch**
**gekenzeichnet, dass** die zwei Richtungen (x, y) in einer Ebene parallel zur Ebene des Türblatts (4) liegen.

4. Tür nach einem der voranstehenden Ansprüche,
**dadurch gekenzeichnet, dass** die Verriegelungseinrichtung (10) formschlüssig mit dem wenigstens einen Positionierungselement (20, 20') verbunden ist.

5. Tür nach einem der voranstehenden Ansprüche,
**dadurch gekenzeichnet, dass**
ein Abdeckprofil (7) mit dem Halteprofil (6) verbunden ist und dass die Verriegelungseinrichtung (10) durch das Abdeckprofil (7) positionsgenau in einer Richtung senkrecht zur Ebene des Türblatts (4) am Halteprofil (6) festgelegt ist.

6. Tür nach einem der voranstehenden Ansprüche, **dadurch gekenzeichnet, dass** das Halteprofil (6) an der Innenseite (3) des Türblatts (4) befestigt ist.

7. Tür nach Anspruch 6, **dadurch**
**gekenzeichnet, dass** im Halteprofil (6) und im Türblatt (4) überlappende Aussparungen (26, 27) zum Verbinden der Verriegelungseinrichtung (10) mit einem Handhebel (19) vorgesehen sind.

8. Tür nach Anspruch 7, **dadurch gekenzeichnet, dass** die Verriegelungseinrichtung (10) ein Verbindungselement (18) für die Verbindung mit dem Handhebel (19) und wenigstens eine durch das Verbindungselement (18) geführte Verriegelungsstange (11) aufweist.

9. Tür nach Anspruch 7 oder 8, **dadurch gekenzeichnet, dass** die Verriegelungseinrichtung (10) benachbart zu einer Verbindung mit dem Handhebel (19) an dem wenigstens einen Positionierungselement (20, 20') befestigt ist.

10. Tür nach Anspruch 9, **dadurch gekennzeichnet, dass** die Verriegelungseinrichtung (10) oberhalb und unterhalb des Verbindungselements (18) für den Handhebel (19) über wenigstens zwei Positionierungselemente (20, 20') am Halteprofil (6) befestigt ist.

11. Tür nach einem der voranstehenden Ansprüche,
**dadurch gekenzeichnet, dass** die Verriegelungseinrichtung (10) wenigstens ein Befestigungselement (15, 15') zur Befestigung an dem wenigstens einen Positionierungselement (20, 20') und eine durch das wenigstens eine Befestigungselement (15, 15') geführte Verriegelungsstange (11) aufweist.

12. Tür nach einem der voranstehenden Ansprüche,
**dadurch gekenzeichnet, dass** das Halteprofil (6) Teil eines umlaufenden Türrahmens ist.

13. Tür nach Anspruch 12, **dadurch gekennzeichnet, dass** die Verriegelungseinrichtung (10) wenigstens einen gegenüber dem Halteprofil (6) teilweise überstehenden Eckverstärker (13) zum Verbinden des Halteprofils (6) mit anderen Teilen des Türrahmens aufweist.

14. Tür nach Anspruch 13, **dadurch gekenzeichnet, dass** die Verriegelungseinrichtung (10) wenigstens eine durch den wenigstens einen Eckverstärker (13) geführte Verriegelungsstange (11) aufweist.

15. Tür nach einem der Ansprüche 11 bis 14, **dadurch gekennzeichnet, dass** die Verriegelungsstange (11) durch wenigstens eine an wenigstens einem Eckverstärker (13) und/oder an wenigstens einem Befestigungselement (15, 15') anliegende Aufdickung der Verriegelungsstange (11) in Längsrichtung positioniert gehalten ist.

16. Tür nach einem der voranstehenden Ansprüche,
**dadurch gekenzeichnet, dass**
sich das Halteprofil (6) wenigstens über einen Großteil der Höhe der Tür (1) erstreckt.

17. Tür nach einem der voranstehenden Ansprüche,
**dadurch gekenzeichnet, dass**
sich das Halteprofil (6) im Wesentlichen über die gesamte Höhe der Tür (1) erstreckt.

18. Tür nach einem der voranstehenden Ansprüchen, **dadurch gekenzeichnet, dass** die Verriegelungseinrichtung (10) an ihren beiden Enden gegenüber dem Halteprofil (6) übersteht.
